# EUROPÄISCHE PATENTANMELDUNG

(11) **EP 1 338 571 A1**
(43) Veröffentlichungstag der Anmeldung: **27.08.2003**
(21) Anmeldenummer: 02025210.2
(22) Anmeldetag: 12.11.2002
(51) Int. Cl.: C02F 3/12, B01D 21/24

(54) **Kläreinheit**

(30) Priorität: 06.05.2002 DE 10220256; 14.11.2001 HU 0104920
(71) Anmelder: OMS Verwaltungs- und Beteiligungs GmbH, 65185 Wiesbaden (DE)
(72) Erfinder: Adelhütte, Hugo, 65388 Schlangenbad (DE)
(74) Vertreter: Weber, Dieter, Dr.

(57) **Zusammenfassung**

Die vorliegende Erfindung betrifft Kläreinheit für Abwässer, mit mindestens einem Belebungsbecken (1) mit biologischer Abwasserbehandlung und mit mindestens einem, innerhalb oder außerhalb des Belebungsbeckens angeordneten, im wesentlichen trichterförmigen Nachklärbecken (2), in welchem sich Feststoffe und daran gebundene Mikroorganismen absetzen, die aus dem Nachklärbecken (2) in das Belebungsbecken (1) zurückzuführen sind. Um eine entsprechende Kläreinheit zu schaffen, in welcher die Absetzvorgänge im Nachklärbecken möglichst ungestört und optimal ablaufen und das Nachklärbecken eine geringere Bautiefe aufweisen kann und eine bessere Funktionseigenschaft besitzt, wird erfindungsgemäß vorgeschlagen, daß das Nachklärbecken eine im wesentlichen hohle Zentralsäule (3) aufweist, die einen kleineren Durchmesser hat als das sich nach unten verjüngende Nachklärbecken an seinem Grund und wobei die Zentralsäule außerdem Einrichtungen (5,6) zum Schlammabzug vom Grund des Nachklärbeckens aufweist.

## Beschreibung

Die vorliegende Erfindung betrifft eine Kläreinheit für Abwässer, mit mindestens einem Belebungsbecken mit biologischer Abwasserbehandlung und mindestens einem im wesentlichen trichterförmigen, in welchem sich der Belebtschlamm sedimentiert. Aus dem Nachklärbecken wird der Belebtschlamm wieder in das Belebungsbecken zurückgeführt.

Ebenso betrifft die vorliegende Erfindung ein Verfahren zum Betrieb einer solchen Kläreinheit. Entsprechende Kläreinheiten, die auch unter dem Namen "Klärcenter" bekannt sind, werden in der deutschen Patentanmeldung Nr. 39 19 368 beschrieben.

Derartige Klärcenter bzw. Kläreinheiten haben den Vorteil, daß im Falle mehrerer trichterförmiger Nachklärbecken die Tiefe des einzelnen Nachklärbeckens geringer ausfallen kann, als wenn man nur ein einziges Nachklärbecken vorsehen würde. Die Tiefe der Trichterbecken resultiert aus dem hydraulisch erforderlichen Beckendurchmesser sowie aus der erforderlichen Trichterwandneigung von ungefähr 60°. Die Trichterbeckentiefe beträgt im allgemeinen mindestens 2 m und teilweise auch bis zu 20 m. Zur Vermeidung großer Tiefen ist demnach in der DE 39 19 368 vorgesehen, daß mehrere trichterförmige Nachklärbecken jeweils geringerer Tiefe verwendet werden. Nach diesem Stand der Technik befinden sich die Nachklärbecken vorzugsweise innerhalb des Belebungsbekkens, sie können im Prinzip aber auch außerhalb des Belebungsbeckens angeordnet sein (sogenannte aufgelöste Bauweise).

Das Innere der Nachklärbecken ist zwar indirekt mit dem Belebungsbecken verbunden, jedoch nur in der Weise, daß die in dem Belebungsbecken erzeugte, relativ starke Strömung sich nicht in das Innere der Nachklärbecken überträgt. In den Nachklärbecken soll sich vielmehr aller in dem Belebungsbecken bewußt aufgewirbelter Belebtschlamm absetzen und am Grund des Nachklärbeckens ansammeln, welches zu diesem Zweck nach unten trichterförmig verjüngt verläuft. Im Nachklärbekken tritt eine Beruhigung ein. Die Reduzierung der Strömung bewirkt, daß die Abtrennung des Belebtschlammes vom Abwasser und seine Sedimentation erfolgt. Damit die Sedimentation effektiv ist, müssen das oder die Nachklärbecken eine gewisse Mindestgröße und wegen der erforderlichen Trichterausbildung - zwecks Schlammabzug - auch eine entsprechende Mindesttiefe haben. Demzufolge weisen sie entsprechend bekannten Nachklärbecken eine relativ große Tiefe auf.

Gegenüber diesem Stand der Technik liegt der vorliegenden Erfindung die Aufgabe zugrunde, eine entsprechende Kläreinheit zu schaffen, in welcher die Absetzvorgänge im Nachklärbecken möglichst ungestört und optimal ablaufen und das Nachklärbecken eine geringere Bautiefe aufweisen kann und eine bessere Funktionseigenschaft besitzt.

Diese Aufgabe wird dadurch gelöst, daß das Nachklärbecken einen im wesentlichen hohlen, zentral angeordneten Zylinder aufweist, der einen geringeren Durchmesser hat als das Nachklärbecken an seinem Grund. Vorzugsweise weist der Zylinder gleichzeitig Einrichtungen zum Schlammabzug vom Grund des Nachklärbeckens auf.

Im Gegensatz zu dem herkömmlichen Klärcenter ist also bei der Kläreinheit gemäß der vorliegenden Erfindung innerhalb eines Nachklärbeckens eine zentrale Säule angeordnet. Dies bedeutet, daß das Nachklärbecken sich nach unten hin nicht bis auf einen sehr kleinen Durchmesser verjüngen muß, damit sich dort Schlamm absetzen kann, sondern es wird bereits durch den Zentralzylinder ein gewisser Platz in dem trichterförmigen Nachklärbecken eingenommen, so daß dieses sich nur noch bis auf einen Durchmesser verjüngen muß, der etwas größer ist als der Durchmesser des Zentralzylinders. Dabei wird ein ringförmiger, im Querschnitt in etwa V-förmiger oder trapezförmiger Absetzraum für den Schlamm gebildet. In diesem Bereich hat der Zylinder außerdem noch Abzugs- bzw. Absaugeinrichtungen für den sich dort ansammelnden Schlamm. Der zentrale Zylinder, der gleichzeitig auch als Einlaufeinrichtung für das Nachklärbecken dient, erfüllt die folgenden verfahrenstechnischen Aufgaben:

### 1. Einlaufsystem

Im oberen Innenzylinderbereich fließt das Abwasser-Schlammgemisch vom Belebungsbecken in den Zylinder. Dieser Bereich wird zur Entgasung und zur Flockenbildung genutzt. Die Aufenthaltszeit beträgt ca. 5 min. Aus der rechnerisch ermittelten Einlaufhöhe, welche in etwa in der Mitte der Speicherzone als Nachklärbecken angeordnet ist, und der Aufenthaltszeit wird der Durchmesser des Zentralzylinders ermittelt.

Das Abwasser-Schlammgemisch wird radial gleichmäßig verteilt in den Absetzraum eingebracht.

Um den Absetzschlammstrom nicht durch den Einlaufschlammstrom zu behindern, wird der Einlaufstrom durch eine Umlenktrompete richtungsmäßig in eine horizontale Einlaufströmung verändert.

Das Abwasser strömt in einer vertikalen Aufwärtsströmung zu den radial angeordneten Klärwasserabzugsvorrichtungen.

Oberhalb der Einlaufebene entsteht ein Flockenfilter. Dieser separiert selbst feinste Schwebstoffpartikel. Je geringer der Schwebstoffanteil im Ablauf der Kläranlage ist, um so besser ist der Reinigungsgrad.

### 2. Reduzierung der Beckentiefe

Der auf der Sohle stehende Zylinder reduziert die Bautiefe des Nachklärbeckens um ca. das Maß seines Durchmessers.

### 3. Bodenschlammabzug

An der Sohle des Nachklärbeckens wird bei dem Zentralzylinder radial gleichmäßig über den gesamten Umfang des Zylinders der Rücklaufschlamm abgezogen. Die horizontale Absaugströmung wird durch eine Umlenktrompete in eine Aufwärtsbewegung verändert. Der trompetenförmige Absaugkanal geht in ein Steigrohr über. Um eine annähernd gleichmäßige Strömung im Radialabzug bzw. im Steigrohr zu erzeugen, kann der trompetenförmige Absaugkanal konisch ausgeführt werden.

Der Raum oberhalb des Schlammabzugskanals und außerhalb des Steigrohres ist bis zur Einlauftrompete ein Hohlraum, welcher mit Wasser gefüllt wird.

### 4. Klarwasserabzug

Im oberen äußeren Bereich des Zentralzylinders befindet sich die Klarwassersammelrinne, in welcher die radial angeordneten, gelochten Klarwassertauchrohre angeschlossen sind.

Es versteht sich, daß die Säule nicht notwendigerweise exakt zylindrisch sein muß, sondern z. B. auch einen polygonalen, 6- oder 8-eckigen Grundriß haben kann und auch eine nach oben oder unten verjüngt zulaufende Form haben kann.

Hinsichtlich des entsprechenden Verfahrens wird die der Erfindung zugrunde liegende Aufgabe dadurch gelöst, daß gereinigtes Abwasser aus dem mindestens einen Nachklärbecken abgezogen wird, daß weiterhin der sich im Nachklärbecken absetzende Schlamm abgezogen und in das Belebungsbecken zurückgeführt wird und daß eine Ablaufkammer am Grund des Belebungsbeckens über eine Zufuhrleitung mit dem Inneren der Säule verbunden ist und in deren oberen Bereich mündet, so daß der aufgrund einer externen Abwasserzufuhr und der Schlammrückführung in das Belebungsbecken ansteigende Wasserspiegel durch hydrostatischen Druck Abwasser von der Ablaufkammer in die Säule drückt, sobald der Abwasserspiegel im Belebungsbecken die Höhe der Mündung der Zufuhrleitung in der Säule übersteigt.

Die zentrale Säule, die sich bis zum Boden des Nachklärbeckens erstreckt, hat vorzugsweise einen Durchmesser von mindestens 30 cm, vorzugsweise liegt ihr Durchmesser im Bereich zwischen 0,8 m und 3 m. In Anbetracht der konischen Wandung eines typischen Nachklärbeckens, die gegenüber der Horizontalen um einen Winkel von mindestens 50° oder 55° geneigt ist, bedeutet dies, daß das entsprechende Abschneiden der Konusspitze gemäß der vorliegenden Erfindung die Bautiefe mindestens um den Durchmesser des Zylinders verringert. Der erforderliche Volumenausgleich für die geringere Bautiefe und das Säulenvolumen kann sehr leicht durch eine geringfügige Vergrößerung des Durchmessers bzw. im Zylinder-Absetzraum bereitgestellt werden.

In der bevorzugten Ausführungsform der Erfindung weist der Zylinder in seinem unteren Mantelbereich mehrere Öffnungen auf, die lediglich durch Stege voneinander getrennt sind, welche die Säule nach unten abstützen und im Inneren der Säule befindet sich hinter den Abzugsöffnungen ein kegelmantelförmiger Spalt, der mit dem zentralen Steigrohr verbunden ist. Dieser Spalt kann gebildet werden durch einen unteren Innenkegel, der auf dem Boden des Nachklärbeckens aufsitzt und der auch wahlweise mit der Säule bzw. dem Säulenmantel fest verbunden sein kann, sowie einem im Abstand hierzu angeordneten oberen Kegel bzw. Kegelwand, die parallel zu dem unteren Kegel verläuft, so daß dazwischen der kegelmantelförmige Spalt gebildet wird. Wahlweise kann der Kegelwinkel der oberen Wand kleiner sein als derjenige der unteren Wand, so daß sich der kegelförmige Spalt zum Zentrum hin erweitert, so daß der effektive Fließquerschnitt von außen zur Mitte hin weniger stark reduziert wird. Das an den Spalt in der Mitte anschließende Steigrohr kann beispielsweise mit einer Zufuhr für Druckluft versehen sein, durch welche der in dem Steigrohr befindliche Schlamm nach oben gefördert wird und dadurch eine Sogwirkung in dem unteren Absaugspalt bzw. den Absaugöffnungen am unteren Rand der Säule erzeugt, so daß der sich um den unteren Rand der Säule am Boden des Nachklärbeckens ansammelnde Schlamm von dort abgezogen wird. Dieser Schlamm wird in das Belebungsbecken zurückgeführt, hier werden die Mikroorganismen benötigt, welche im Abwasser enthaltene gelöste organische Verschmutzung im Belebungsbecken abbauen sollen.

Der Klarwassersammelrinne in Richtung Becken vorgebaut befindet sich ein Schwimmschlammabzug, mit dem durch Abskimmung die an der Beckenoberfläche befindlichen Schlammpartikel entfernt werden können. Bei größeren Beckendurchmessern ist es von Vorteil, wenn vom äußeren Rand des Nachklärbeckens über Wasserspritzdüsen oder Luftdüsen der Schwimmschlamm zur Abskimmvorrichtung transportiert wird.

Die Abzugseinrichtungen für gereinigtes Abwasser sind mit ihren Abzugsöffnungen vorzugsweise im Abstand unter der Oberfläche des Wasserspiegels im Nachklärbecken angeordnet, vorzugsweise um mindestens 20 cm unterhalb des Wasserspiegels und besonders bevorzugt im Bereich zwischen 30 und 80 cm unterhalb dieses Wasserspiegels. Hierfür sind z.B. sich radial von der Außenseite der Säule aus erstreckende Abzugsrohre mit einer Mehrzahl von seitlichen Öffnungen geeignet, die z.B. in einer Tiefe von 50 cm unterhalb des Wasserspiegels im Nachklärbecken angeordnet sind. Diese Abzugsrohre sind mit einer die Säule umgebenden, ringförmigen Abzugskammer verbunden, von wo aus das gereinigte Abwasser über eine zentrale Leitung abgeführt wird.

Wenn in einem Belebungssystem mehrere Nachklärbecken vorgesehen sind, ist in dem Belebungssystem ein zentrales Rohr zu sehen, welches in seinem unteren Bereich eine Ablaufkammer aufweist, von welcher aus die Nachklärbecken bzw. die in den Nachklärbecken vorhandenen Zentralzylinder mit dem Abwasser-Schlamm-Gemisch versorgt werden. Das zentrale Rohr kann ebenso Sammeleinrichtungen für die Ableitungen des gereinigten Abwassers aus den Nachklärbecken sein.

Weitere Vorteile, Merkmale und Anwendungsmöglichkeiten der vorliegenden Erfindung ergeben sich aus der folgenden Beschreibung einer bevorzugten Ausführungsform und der dazugehörigen Figuren. Es zeigen:
- Figur 1: eine Draufsicht auf eine erfindungsgemäße Kläreinheit,
- Figur 2: einen Schnitt durch die Kläreinheit gemäß Figur 1, wobei die Schnittebene die Achsen des Belebungsbeckens und eines der Nachklärbecken enthält,
- Figuren 3a-c: verschiedene Typen von Hebeeinrichtungen und
- Figur 4: verschiedene Arten der Schlammabsaugung am Fuß der Säule in einem Nachklärbecken.

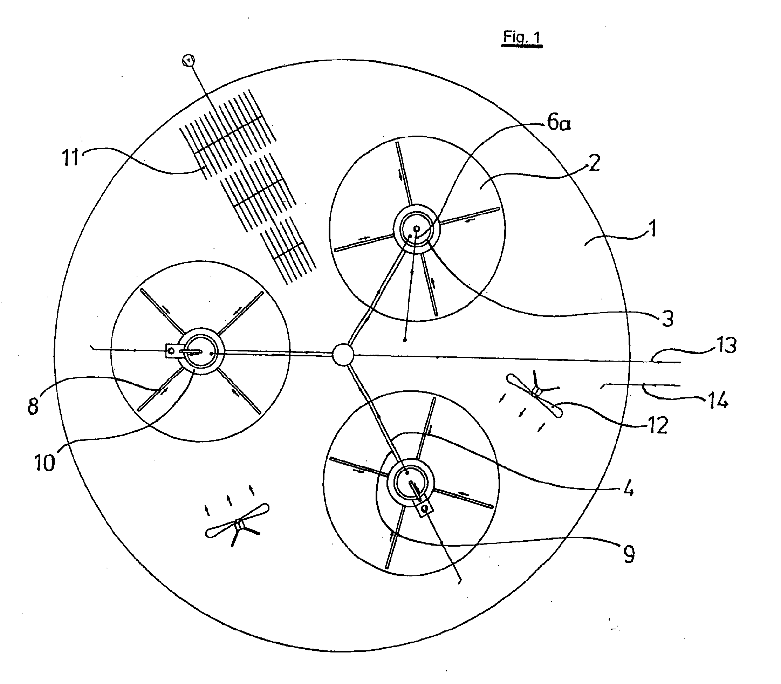

Gemäß Figur 1 erkennt man ein großes, kreisförmiges Belebungsbecken 1, in welchem Belüftungseinrichtungen 11 und Verwirbelungseinrichtungen 12 zur Erzeugung einer Durchmischung und Strömung des Abwassers vorgesehen sind. Hierdurch sollen die in dem Belebungsbecken vorhandenen Mikroorganismen intensiv mit dem Abwasser in Kontakt gebracht werden, um eine biologische Vorreinigung, das heißt in erster Linie den Abbau organischer Substanzen in dem Abwasser, zu bewirken. Wie man erkennt, sind in dem Belebungsbecken 1 weiterhin drei Nachklärbecken 2 angeordnet, wobei die Nachklärbecken 2 von einem im Belebungsbecken 1 zentral angeordneten Standrohr 15 aus sowohl mit vorgereinigtem Abwasser versorgt werden als auch das gereinigte Wasser über dieses zentrale Standrohr abführen.

Die Zufuhr des noch ungereinigten Abwassers erfolgt über eine Leitung 14 und das gereinigte Abwasser wird von dem zentralen Rohr aus über eine Leitung 13 abgeführt.

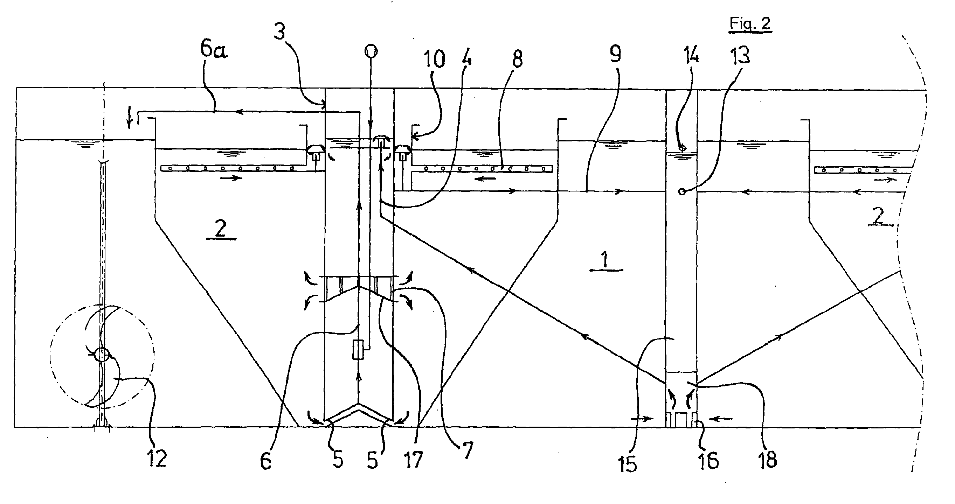

Weitere Details sind besser in der Schnittansicht gemäß Figur 2 zu erkennen.

Die Figur 2 stellt einen Ausschnitt aus dem in Figur 1 dargestellten Belebungsbecken in einem vertikalen Schnitt dar, wobei die Schnittebene sowohl die Achse des zentralen Rohres 15 als auch die Achse des Zylinders 3 eines der Nachklärbecken 2 enthält. Rechts in Figur 2 erkennt man ganz am Rand ein weiteres Nachklärbecken 2 und links davon das in dem Belebungsbecken 1 zentral angeordnete Standrohr 15. Der untere Bereich des Standrohres 15 ist als nach oben abgeschlossene Kammer 18 ausgebildet und der untere Rand der Kammer 18 weist mehrere Zulauföffnungen 16 für das Abwasser-Schlamm-Gemisch auf. Diese Kammer 18 ist über drei Leitungen 4 mit jeder der Säulen 3 der drei Nachklärbecken 2 verbunden. Wie man erkennt, bildet das Ende der Leitung 4 ein vertikal ausgerichtetes Überlaufrohr, über dessen Rand das Abwasser-Schlamm-Gemisch überläuft, wenn der hydrostatische Druck des Abwassers in dem Belebungsbecken 1 hierfür ausreicht. Zweckmäßigerweise ist das Ende der Leitung 4 höhenverstellbar vorgesehen, so daß der Überlauf am Ende der Leitung 4 dem Abwasserspiegel im Belebungsbecken 1 angepaßt werden kann. Durch Anheben des Überlaufendes der Leitung 4 kann die Zufuhr von Abwasser aus dem Belebungsbekken 1 in ein Nachklärbecken 2 gestoppt werden und durch Anpassung der Höhe dieser Überlaufleitungen 4 in den verschiedenen Nachklärbecken kann eine gleichmäßige Verteilung des Abwassers auf die einzelnen Nachklärbecken erreicht werden. Ebenso ist es möglich, zeitweise immer nur in eines der Nachklärbecken Abwasser einlaufen zu lassen und die Zufuhr zu den anderen beiden Nachklärbecken jeweils zu stoppen, damit sich dort die Feststoffe noch schneller absetzen, wobei der Zulauf turnusmäßig weitergeschaltet wird, wobei dies einfach durch Anheben und Absenken der Enden der Zulaufleitungen 4 erfolgen kann. Abgesehen von der Verbindung über diese Zulaufleitungen 4 sind die Nachklärbecken 2 von dem Belebungsbecken 1 vollständig getrennt, so daß auch der Wasserspiegel innerhalb der Nachklärbecken 2 getrennt regulierbar ist. Konkret erfolgt dieses durch Abziehen von gereinigtem Abwasser über Abzugsrohre 8, die sich radial von dem zentralen Zylinder 3 aus erstrecken und die über ihre Länge hinweg verteilt eine Reihe von Abzugsöffnungen aufweisen. Auch dieser Wasserabzug kann, falls gewünscht, nach dem Überlaufprinzip erfolgen, indem der Wasserspiegel innerhalb des Zylinders 3 erhöht wird, das Wasser von dort über die unteren Öffnungen 7 in das eigentliche Nachklärbecken eintritt und dessen Wasserspiegel erhöht. Hierdurch wird auch der Wasserspiegel in einem den oberen Bereich der Säule umgebenden Ringraum 10 erhöht, der über die Abzugsrohre 8 bzw. die darin vorgesehenen Abzugsöffnungen mit dem Nachklärbecken 2 verbunden ist. Das Wasser kann dann über einen Überlauf in eine Leitung 9 eintreten und fließt von dort über die zentrale Austrittsleitung 13 ab. Selbstverständlich kann das Wasser auch aktiv über die Leitungen 9, 13 aus dem Ringraum 10 abgepumpt werden, so daß der Wasserspiegel in diesem Ringraum sinkt und dadurch Wasser aufgrund des hydrostatischen Drucks des Wassers im Nachklärbecken 2 durch die Abzugsrohre 8 in den Ringraum 10 nachströmt.

Selbstverständlich hat auch das Absaugen des Schlammes am Grund des Nachklärbeckens und dessen Überführung in das Belebungsbecken einen gewissen, wenn auch geringen Einfluß auf den Wasserspiegel im Nachklärbecken und im Belebungsbecken.

Neben der bereits diskutierten Zulaufleitung 4 weist der Zylinder etwa auf mittlerer Höhe auch Austrittsöffnungen 7 auf, die zweckmäßigerweise über den gesamten Zylinderumfang verteilt sind. Nach unten wird der Abwasser enthaltende Raum der Säule 3 durch eine kegelförmige Trennwand 17 begrenzt, die gleichzeitig auch den unteren Rand der Austrittsöffnungen 7 definiert. Diese Trennwand 17 kann sich auch über den Außendurchmesser der zentralen Säule hinaus erstrecken, um die Strömung des aus den Austrittsöffnungen 7 austretenden Wassers im wesentlichen horizontal zu richten.

Im Nachklärbecken 2 sollte das Wasser möglichst ruhig strömen, so daß sich Schwebstoffe besser absetzen und konglomerieren können.

Entsprechender Schlamm sammelt sich daher in einem den Zylinder umgebenden ringförmigen Raum an, der einen in etwa trapezförmigen Querschnitt hat. In diesem Bereich weist die Säule an ihrer Außenseite mehrere Öffnungen bzw. Kanäle 5 auf, die dem Absaugen von Schlamm dienen und die mit einer zentralen Steigleitung 6 in dem Zylinder 3 verbunden sind. Die zentralen Kanäle 5 können auch einfach gebildet werden durch einen in etwa kegelmantelförmigen Spalt, der zwischen einem unteren Kegel und einem weiteren Innenkegel des Zylinders gebildet wird, wie in Figur 2 erkennbar. Dabei kann es sich um zwei im Abstand in den Zylinder eingesetzte kegelmantelförmige Platten handeln. Nicht erkennbar sind in Figur 2 vertikale Stege, welche die Öffnungen zu den Kanälen 5 begrenzen und die Säule 3 nach unten abstützen. Der Zylinderraum oberhalb dieses Kegels und unterhalb der ebenfalls kegelförmigen Trennwand 17 kann entweder leer sein oder auch mit Beton, Wasser oder irgendeinem anderen Füllstoff ausgefüllt sein, um Auftriebskräfte an der Säule zu vermeiden.

Das Steigrohr 6 ist mit einer geeigneten Hebeeinrichtung ausgestattet, z.B. kann im unteren Bereich des Steigrohres 6 Druckluft eingeblasen werden, wie in Figur 2 dargestellt, wobei diese Druckluft dann Wasser und Schlamm durch die unteren Kanäle aus dem unteren Bereich des Nachklärbekkens 2 absaugt. Über eine horizontal vom Zentrum über den Rand des Nachklärbeckens verlaufende Leitung 6a wird der am Boden des Nachklärbeckens 2 abgepumpte Schlamm wieder dem Belebungsbecken 1 zugeführt, da in diesem Schlamm erhebliche Mengen an Mikroorganismen enthalten sind, die in dem Belebungsbecken 1 eine Reinigung durch Abbau organischer Bestandteile in dem Abwasser bewirken sollen.

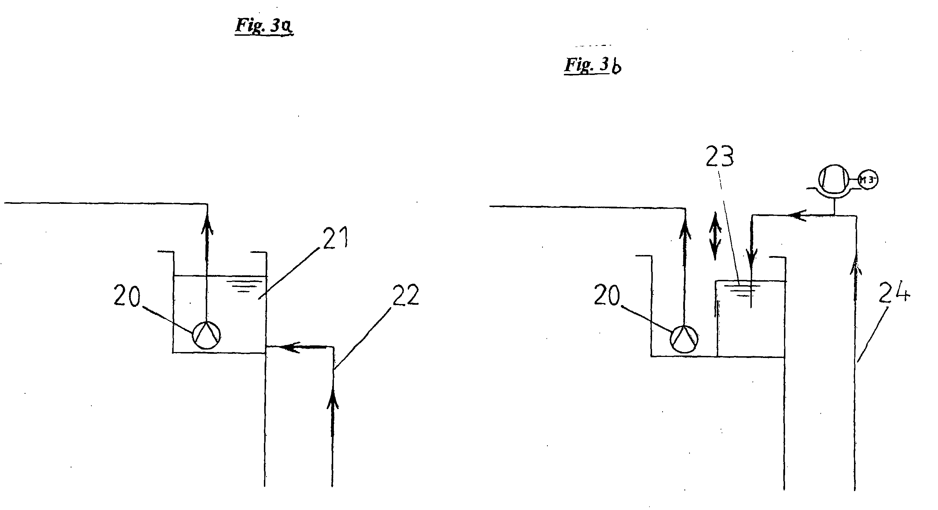

In Figur 3a - c sind verschiedene Hebeeinrichtungen für das gereinigte Abwasser in dem Ringraum 10 dargestellt.

In der Figur 3a ist eine erste Möglichkeit einer Hebeeinrichtung für das gereinigte Abwasser dargestellt. Hier wird Wasser aus einem Raum 21, dessen Wasserspiegel dem Wasserspiegel in dem Nachklärbecken entspricht, abgepumpt. Der Raum 21 ist jedoch über eine Leitung 22 mit der Zentralsäule verbunden, so daß aufgrund des sich einstellenden Druckunterschieds Schlamm vom Grund des Nachklärbeckens über die Leitung 22 in den Raum 21 geleitet wird.

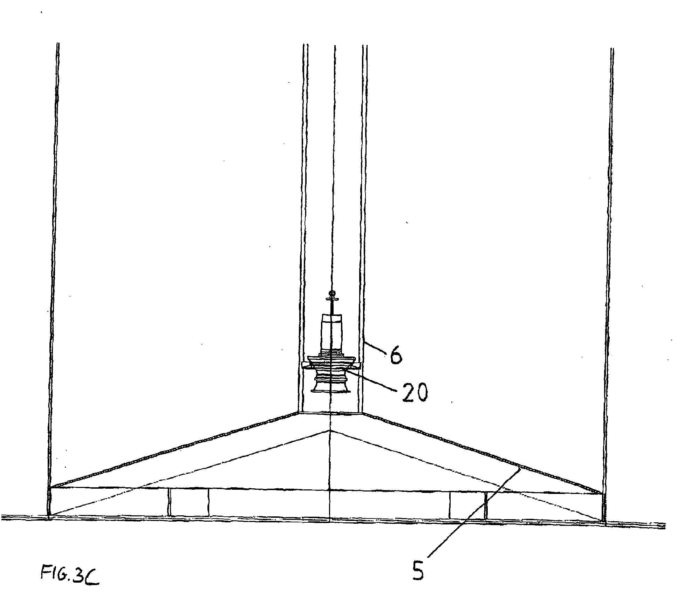

In Figur 3c ist ein Vakuumheber gezeigt. Hier gelangt der Schlamm über eine entlüftete Hebeleitung 24 in eine Pumpvorlage 23 und wird von hier mittels einer Pumpe, z. B. einer Kreiselpumpe 20 in das Belebungsbecken gefördert.

In Figur 3c ist eine Ausführungsform gezeigt, bei der eine Tauchpumpe 20 direkt in dem Steigrohr 9 angeordnet ist.

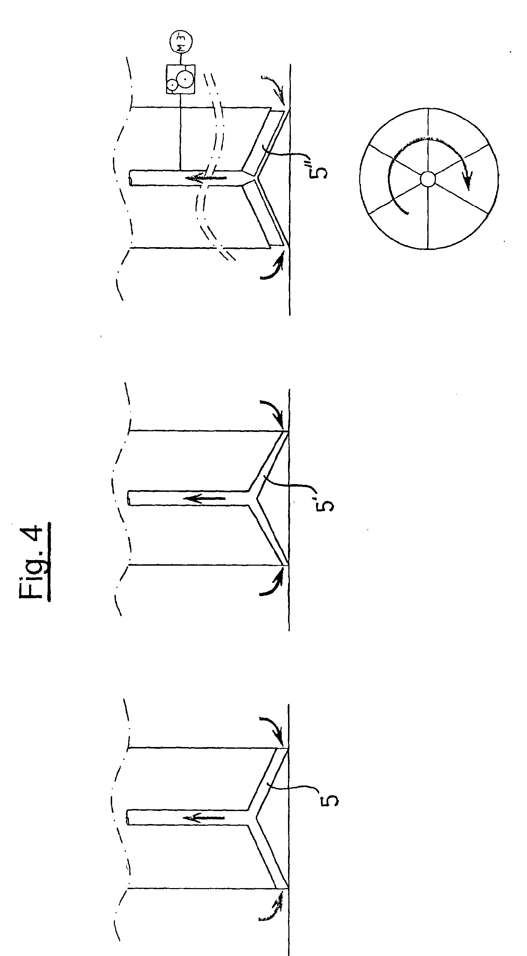

Figur 4 zeigt verschiedene Ausgestaltungen der Absaugeinrichtung bzw. Absaugkanäle 5 im unteren Bereich der Säule 3. Die ganz links dargestellte Variante wurde bereits in Verbindung mit Figur 2 beschrieben. Im mittleren Teil der Figur 4 erkennt man einen ebenfalls in etwa kegelmantelförmigen Spaltraum 5', dessen Höhe jedoch vom Rand zum Zentrum hin zunimmt, weil der Kegelwinkel der oberen Begrenzung dieses Spaltraumes 5' kleiner ist als derjenige des unteren Begrenzungskegels. Dies hat den Sinn, den bei einer radial einwärts gerichteten Strömung immer kleiner werdenden Strömungsquerschnitt eines Spaltes gleichbleibender Breite auszugleichen, so daß die Strömungsgeschwindigkeit von außen nach innen bei der Ausführungsform, die in der Mitte der Figur 4 dargestellt ist, gleichbleibt oder weniger stark zunimmt als im Falle der links dargestellten Ausführungsform. In der ganz rechts in Figur 4 dargestellten Variante ist die obere Kegelwand mit Lamellen 5" ausgestattet und sie ist zusätzlich gegenüber der Säule und um die Achse der Säule drehbar, so daß die Lamellen 5" beim Drehen des oberen Kegels bzw. des damit verbundenen Steigrohres 6 den Spaltraum zwischen der unteren und der oberen Kegelwand durchkämmen und sich eventuell auf der unteren Kegelwand ansammelnden Schlamm abstreifen, so daß dieser durch das Steigrohr 6 nach oben befördert werden kann. Unterhalb der Schnittdarstellung rechts in Figur 4 erkennt man noch eine Draufsicht auf den Lamellenkegel von oben oder unten.

Die erfindungsgemäße Kläreinheit ist ebenso wie das bereits aus der DE 39 19 368 bekannte Klärcenter eine sehr kompakte Kläreinheit mit der vollen Funktionsfähigkeit einer üblichen Kläranlage mit biologischer Vorreinigung und einer Nachklärung. Die Anordnung eines zentralen Zylinders verringert die Bauhöhe insbesondere der Nachklärbecken und ermöglicht dennoch ein relativ schnelles Absetzen von Feststoffen bzw. Schlamm in dem Absetzbecken, da das vorgereinigte Abwasser in strömungstechnisch günstiger Weise durch den Mantel der Säule eingebracht werden kann und die Feststoffe sowohl an den geneigten Wänden des Nachklärbeckens als auch an den senkrechten Wänden der Säule leicht abgleiten.

Die Durchflußmengen und Durchlaufgeschwindigkeiten können in sehr einfacher Weise durch Heben und Senken der verschiedenen Überläufe reguliert werden, wobei selbstverständlich auch andere Abpump- und Hebeeinrichtungen verwendet werden können.

## Patentansprüche

1. Kläreinheit für Abwässer, mit mindestens einem Belebungsbecken (1) mit biologischer Abwasserbehandlung und mit mindestens einem, innerhalb oder außerhalb des Belebungsbekkens (1) angeordneten, im wesentlichen trichterförmigen Nachklärbecken (2), in welchem sich Feststoffe und daran gebundene Mikroorganismen absetzen, die aus dem Nachklärbekken (2) in das Belebungsbecken (1) zurückzuführen sind, **dadurch gekennzeichnet, daß** das Nachklärbecken eine im wesentlichen hohle Zentralsäule (3) aufweist, die einen kleineren Durchmesser hat als das sich nach unten verjüngende Nachklärbecken (2) an seinem Grund und wobei die Zentralsäule außerdem Einrichtungen (5, 6) zum Schlammabzug vom Grund des Nachklärbeckens (2) aufweist.

2. Kläreinheit nach Anspruch 1, **dadurch gekennzeichnet, daß** der Zylinder einen Außendurchmesser von mindestens 30 cm bis 3 m und vorzugsweise einen Durchmesser zwischen 0,8 m und 3 m aufweist.

3. Kläreinheit nach Anspruch 1 oder 2, **dadurch gekennzeichnet, daß** ein Zulaufrohr (4) für die Zuführung von Abwasser aus dem Belebungsbecken (1) in das Nachklärbecken (2) im Inneren des Zylinders (3) und in deren oberen Bereich mündet, wobei der Zylinder (3) Austrittsöffnungen zu dem Nachklärbecken deutlich unterhalb der Mündung des Zulaufs (4) in dem Zylinder (3) aufweist.

4. Kläreinheit nach Anspruch 3, **dadurch gekennzeichnet, daß** der Zulauf als Überlaufrohr in dem Zylinder ausgebildet ist, welches oberhalb des normalen Wasserspiegels des Nachklärbeckens (2) in dem Zylinder (3) mündet.

5. Kläreinheit nach einem der Ansprüche 1 bis 4, **dadurch gekennzeichnet, daß** im Mantel des Zylinders (3) etwa auf halber Höhe zwischen dem Grund des Nachklärbeckens (2) und dem normalen Wasserspiegel nach Klärbecken (2) Austrittsöffnungen (7) für das über den Zylinder (3) eingeleitete Wasser aus dem Belebungsbecken (1) vorgesehen sind.

6. Kläreinheit nach Anspruch 5, **dadurch gekennzeichnet, daß** der Zylinder (3) eine innere Trennwand (17) unmittelbar unterhalb der Austrittsöffnungen (7) aufweist.

7. Kläreinheit nach einem der Ansprüche 1 bis 6, **dadurch gekennzeichnet, daß** das Nachklärbecken (2) die Form eines umgekehrten Hohlkegelstumpfes hat, dessen unterer Durchmesser größer als der Zylinderdurchmesser und kleiner als das Zweifache des Zylinderdurchmessers ist.

8. Kläreinheit nach einem der Ansprüche 1 bis 7, **dadurch gekennzeichnet, daß** am unteren Ende des Zylinders (3) unmittelbar am Grund des Nachklärbeckens (2) Absaugeinrichtungen (5, 6) für den sich am Grund des Nachklärbeckens (2) absetzenden Schlamm vorgesehen sind.

9. Kläreinheit nach Anspruch 8, **dadurch gekennzeichnet, daß** die Absaugeinrichtungen durch einen Spaltraum (5) in Form eines Kegelmantels am unteren Ende des Zylinders (3) gebildet werden, der über Wanddurchbrüche der Säule mit dem umgebenden Raum am Grund des Nachklärbeckens (2) verbunden ist und der im Inneren des Zylinders mit einem Steigrohr (6) verbunden ist.

10. Kläreinheit nach Anspruch 9, **dadurch gekennzeichnet, daß** der kegelförmige Absaugspalt eine von außen nach innen zunehmende Höhe aufweist.

11. Kläreinheit nach Anspruch 9 oder 10, **dadurch gekennzeichnet, daß** in dem Absaugspalt rotierende Räumlamellen (5") vorgesehen sind.

12. Kläreinheit nach einem der Ansprüche 1 bis 11, **dadurch gekennzeichnet, daß** der Abwasserzulauf (4) für den Zylinder (3) im Nachklärbecken (2) auf der Eingangsseite mit einer am Grund des Belebungsbeckens (1) angeordneten Abflußkammer (18) verbunden ist.

13. Kläreinheit nach einem der Ansprüche 1 bis 12, **dadurch gekennzeichnet, daß** für den Abzug gereinigten Abwassers aus dem Nachklärbecken (2) Tauchrohre (8) vorgesehen sind, deren Abzugsöffnungen unterhalb des normalen Abwasserspiegels im Nachklärbecken (2) liegen.

14. Kläreinheit nach Anspruch 13, **dadurch gekennzeichnet, daß** die Abzugsöffnungen der Tauchrohre (8) in einem Bereich von 20 cm bis 150 cm, insbesondere zwischen etwa 30 cm und 80 cm und besonders bevorzugt etwa 50 cm unterhalb des Abwasserspiegels im Nachklärbecken (2) angeordnet sind.

15. Kläreinheit nach einem der Ansprüche 13 oder 14, **dadurch gekennzeichnet, daß** mehrere sich radial von dem Zylinder (3) nach außen erstreckende Tauchrohre (8) vorgesehen sind, die jeweils mehrere, über ihre Länge verteilte Abzugsöffnungen aufweisen und die mit einer ringförmigen, die Säule (3) umgebenden Abzugskammer (10) verbunden sind.

16. Kläreinheit nach einem der Ansprüche 1 bis 15, **dadurch gekennzeichnet, daß** in einem Belebungssystem (1) mehrere Nachklärbecken (2) angeordnet sind.

17. Kläreinheit nach Anspruch 16, **dadurch gekennzeichnet, daß** auch das Belebungsbecken (1) eine zentrale Säule bzw. ein zentrales Rohr (15) aufweist, in welchem Zulaufeinrichtungen für die Abwasserzufuhr in das Belebungsbecken (1) ebenso wie zentrale Abzugseinrichtungen (13) für das aus dem Nachklärbecken abgezogene, gereinigte Abwasser angeordnet sind und welche an ihrem Grund eine Abzugskammer (18) für in die Zylindern (3) der Nachklärbecken (2) zu überführendes Abwasser aufweist.

18. Kläreinheit nach einem der Ansprüche 1 bis 17, **dadurch gekennzeichnet, daß** im oberen äußeren Bereich des Zentralzylinders eine Klarwassersammelrinne angeordnet ist, an welche die radial angeordneten Klarwassertauchrohre angeschlossen sind.

19. Kläreinheit nach Anspruch 18, **dadurch gekennzeichnet, daß** der Klarwassersammelrinne in Richtung Becken vorgebaut ein Schwimmschlammabzug vorgesehen ist, mit dem durch Abskimmung die an der Beckenoberfläche befindlichen Schlammpartikel entfernt werden.

20. Kläreinheit nach einem der Ansprüche 1 bis 19, **dadurch gekennzeichnet, daß** am äußeren Rand des Nachklärbeckens Wasserspritzdüsen oder Luftdüsen für den oberflächlichen Transport von Schwimmschlamm in Richtung einer Abskimmvorrichtung vorgesehen sind.

21. Kläreinheit nach einem der Ansprüche 9 bis 20, **dadurch gekennzeichnet, daß** eine Pumpe (20), vorzugsweise eine Tauchpumpe in dem Steigrohr (6) angeordnet ist.

22. Verfahren zum Betrieb einer Kläreinheit nach einem der Ansprüche 1 bis 20, **dadurch gekennzeichnet, daß** gereinigtes Abwasser aus dem mindestens einen Nachklärbecken (2) abgezogen wird, daß weiterhin der sich im Nachklärbecken (2) absetzende Schlamm abgezogen und in das Belebungsbecken (1) zurückgeführt wird und daß eine Ablaufkammer (18) am Grund des Belebungsbeckens (1) über eine Zufuhrleitung mit dem Inneren der Säule (3) verbunden ist und in deren oberen Bereich mündet, so daß der aufgrund einer externen Abwasserzufuhr und der Schlammrückführung in das Belebungsbecken (1) ansteigende Wasserspiegel durch hydrostatischen Druck Abwasser von der Ablaufkammer (18) in die Säule (3) drückt, sobald der Abwasserspiegel im Belebungsbecken (1) die Höhe der Mündung der Zufuhrleitung in dem Zylinder (3) übersteigt.
